# EUROPEAN PATENT SPECIFICATION

(11) **EP 1 400 703 B1**
(45) Date of publication and mention of the grant of the patent: **09.08.2006**
(21) Application number: 02021016.7
(22) Date of filing: 20.09.2002
(51) Int. Cl.: F16B 9/02

(54) **Vehicle body provided with a connection device**
Fahrzeugkarosserie mit einer Verbindungsvorrichtung
Carrosserie avec dispositif de connexion

(43) Date of publication of application: 24.03.2004
(73) Proprietor: Ford Global Technologies, Inc., Dearborn, MI 48126 (US)
(72) Inventor: Bergman, Tomas, 41728 Göteborg (SE); Cooling, Michael, 41655 Göteborg (SE)
(74) Representative: Lindberg, Klas Valter Bo

(56) References cited:
- DE-A- 19 741 551
- DE-U- 8 711 918
- DE-U- 29 608 134
- DE-U- 29 813 772
- FR-A- 1 197 234
- GB-A- 674 629
- GB-A- 1 515 297
- US-A- 1 164 322

## Description

### Field of the Invention

The invention relates to a vehicle body provided with a connecting device, for providing lateral connection of two structural members of a vehicle body in an adaptable manner according to the preamble of claim 1.

### Technical Background

Connecting devices for lateral fixing of structural members are well known in the art and there exist a variety of devices for providing a robust connection between structural members. Such connecting devices are preferably designed with high accuracy for providing optimum support.

CH 675897 presents a connecting device comprising a structural element provided with at least one receiving opening, in which a coupling device is movably fitted, said coupling device having a passage and being connectable to a screw joint comprising a nut and a threaded bolt extending into said passage and further for engagement with said nut. The nut is adapted to press the coupling device outwards in a radial direction when being pulled by the threaded bolt. This radial pressure causes a deformation of the structural element and a connection between the coupling device and the structural element is accomplished.

In using such prior art solutions stress is induced locally, especially in the deformed zones of the connecting device, leading to e.g. reduced fatigue life. This is especially an issue for components that will experience high forces. Such connecting devices will also be difficult to readjust or to reinstall. For connections with demands on exactness and high accuracy there is also a need for avoiding deformations in the components during connection.

Another issue related to connecting structural members is tolerance deviation during lateral fixing of structural members. When two structural side elements are mutually connected at a fixed lateral distance and the connecting element is either too long or too short this might lead to added strain in some zones of the side element when being connected. The initial deviations may have occurred due to various reasons, such as variations in quality, temperature or simply due to effects from the handling of the structural members in production, etc. Added strain and stress in such zones of the resulting structure might reduce the fatigue life, the shock impact resistance, etc.

For vehicle body structures it is of importance to reduce stress and tension in the structure due to reasons of, for example, safety and quality. In today's compact vehicle design there is a strong need for an easier way of performing lateral fixing of two structural side members at a given distance by a cross member or the like. Furthermore, it is desirable to present a connecting device which allows for a more flexible and functional design of structural members in order to fulfill other design criteria. It is also desirable to reduce the risk for induced stress in the structure from such operation. DE 197 41 551 A1 discloses an alternative prior art connecting device used with a vehicle body according to the preamble of claim 1.

### Summary of the Invention

The object of the present invention is to provide a vehicle body provided with a connecting device that overcomes the above issues, and present a connecting device for fixing of structural members.

A further object of the present invention is to provide vehicle body provided with a safe, robust and reliable connecting device, which can be put together with good accessibility and in a comfortable working position.

These and other objects are achieved by a vehicle body provided with a connecting device according to claim 1. Preferred embodiments of the invention are defined in the dependent claims.

According to the invention there is a vehicle body provided with a connecting device, for providing lateral connection of two structural members of a vehicle body in an adaptable manner, said connecting device comprising a structural element provided with at least one receiving opening, in which a coupling device is movably fitted, said coupling device having a passage and being connectable to a screw joint comprising a nut and a threaded bolt extending into said passage and further for engagement with said nut. The coupling device is expandable and said nut is designed for causing radial expansion of said coupling device by operation of said threaded bolt when said coupling device has reached a hard stop, preferably a structural member, said expansion providing a mechanical connection between an inner sidewall portion of said structural element and an outer sidewall portion of said coupling device, and wherein at least one of said sidewall portions is provided with a rough surface for accomplishing a firm mechanical connection when said coupling device has reached a hard stop and said coupling device has been expanded.

Mutual mechanical connection is enabled when said expandable coupling device has been expanded. The rough surface of at least one sidewall portion causes a mechanical connection which is sufficiently strong for use in e.g. vehicles. Preferably, said surface portions are substantially knurled. Alternatively, although not preferred, said rough surface portions are threaded for mutual engagement. It is realized that according to the invention fixing of said connecting device is enabled by operation of one screw joint.

Preferably, the sidewall portion of the structural element is harder than the coupling device. Hence, a controlled fixing and a strong mechanical connection can be accomplished without causing any permanent deformation of the components of the connecting device. Thus, it is possible to readjust or release the connecting device if desired.

Advantageously, the fixing of said connecting device is enabled by operation of one screw joint which is accessible from the outside of one structural member relative to the expandable coupling device which is arranged relatively to the inside of same structural member.

Suitably, the nut has a wider cross section at the end portion to be arranged away from the closest structural member than the end portion of the nut to be arranged closer to the closest structural member. By pulling such a nut into said passage the pressure on the sidewalls of the coupling device can be controlled and when a sufficient resistance is reached the pulling operation is fulfilled. Preferably, at least a portion of said nut has a conical shape for enabling a smooth load transfer between the components of the connecting device. The expandable coupling device is suitably, but not necessarily, formed in a complementary manner in order to further transfer laterally induced forces in a radial direction.

Preferably, the coupling device is substantially cup shaped. Furthermore, a sidewall of said coupling device is suitably provided with at least one slit propagating along said sidewall in order for the coupling device to be able to expand in a radial direction when exposed to pressure from the nut.

More preferably, said structural element is connected with one end to a structural member and provided with one coupling device in another end portion for enabling lateral fixing in a manner of two structural members in order to compensate for lateral distance tolerance deviations between said structural members.

A connecting device according to the invention is easily adjustable in lateral direction before fixing of the side members. Thus, possibly induced lateral forces, from the fixing of two structural members, will generally be guided in a radial direction by the expandable coupling device to be absorbed by the connecting structural element of the connecting device. Furthermore, by using an expandable coupling device according to the invention safe fixing and tolerance compensation is accomplished in a convenient manner during manufacturing of a body structure.

Advantageously, the structural element is provided with two coupling devices for enabling lateral fixing in an adaptable manner of two structural members. It is realized from the above described that lateral fixing of two structural side members by a connecting device may be accomplished by using such a coupling in at least one of the end portions of the connecting structural element. The second end portion of said connecting device may be fastened to a side member in any conventional manner as long as the first end portion is fastened using the connecting device. It is of course possible to provide each end portion of the structural element with an expandable coupling device in accordance with the invention. This is particularly suitable when the connecting device is to be positioned symmetrically between the structural side members.

The connecting device is especially provided for lateral fixing of a set of A-pillars of a vehicle body. In such case the connecting device is advantageously provided within an IP-panel.

### Brief Description of the Drawings

A currently preferred embodiment of the present invention will now be described in more detail, with reference to the accompanying drawings.
Fig. 1 is a partial exploded perspective view of a connecting device according to an embodiment of the invention.
Fig. 2a is a schematic cross section of a connecting device according to a first embodiment of the invention.
Fig. 2b is a schematic cross section of a connecting device according to a second embodiment of the invention.
Figs. 3a and 3b disclose a cut-up perspective view of two alternative embodiments of the connecting device according to the invention.
Fig. 4a is an enlarged partial cross sectional side view of a preferred embodiment of the connecting device during the connection step.
Fig. 4b is an enlarged partial cross sectional side view of a preferred embodiment of the connecting device when in a laterally fixed position.
Fig. 5 is an enlarged partial cross sectional side view of a fifth embodiment of the connecting device.
Fig. 6 is a schematic perspective view of a connecting device arranged in an IP-panel according to a second aspect of the invention.
Fig. 7 is a perspective view of a vehicle structure provided with two connecting devices according to a third aspect of the invention.

### Detailed Description of Preferred Embodiments

A first embodiment of the invention related to a vehicle body provided with a connecting device will be described in more detail in the following with reference to the accompanying drawings.

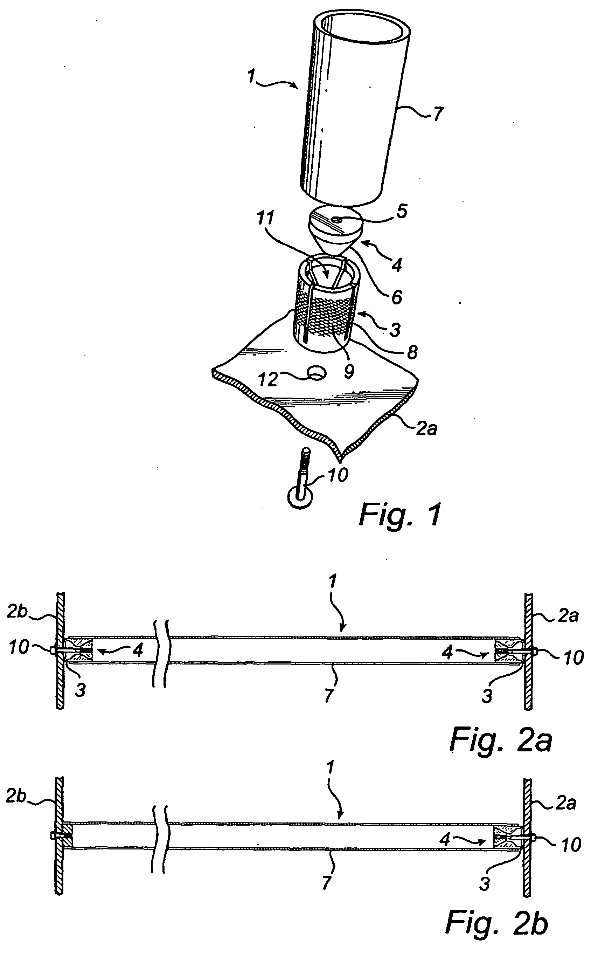

Referring now to fig 1, a connecting device 1 for enabling lateral fixing of a first structural member 2a is disclosed. The connecting device 1 comprises at least one structural element 7. The structural element 7 is preferably a beam, a profile or a steering member. Furthermore, the structural element 7 has at least one end portion with a receiving opening. An expandable coupling device 3 is designed for being at least partially introduced into said receiving opening. The expandable coupling device 3 is adapted for fitting in an adjustable manner along said structural element 7. The expandable coupling device 3 is adjustable by an engaging screw joint. The end portion of the disclosed structural element 7 has a tubular shape. The expandable coupling device 3 is provided with a passage 11. The screw joint comprises a nut 4 and a threaded bolt 10. The bolt is arranged from the opposite side of one of the side members 2 to be connected through a hole 12 and for extending into said passage 11 and further for engagement with said nut 4. The nut 4 being designed for causing expansion of said expandable coupling device 3 when being pulled into said passage 11 by said threaded bolt 10. According to a preferred embodiment the expandable coupling device 3 is formed essentially as a cup 9. A sidewall of said expandable coupling device 3 is preferably provided with one or more slits 8 for facilitating the radial expansion of the expandable coupling device 3. Furthermore, a portion of said nut 6 has a conical shape for being easy to adjust into closer engagement with said expandable coupling device 3. The passage 11 of the expandable coupling device is preferably provided with a complementary shape for providing a reliable load transfer and reduce the risk for locally induced stress in the structure.

Referring now to fig 2a, a first preferred embodiment of the invention is disclosed. According to the first preferred embodiment two structural members 2a, 2b are connected by a connecting device 1. The structural members 2a, 2b are mutually arranged at a fixed lateral distance. Both end portions 4 of the connecting device 1 are provided with an adjustable coupling device 3 in order to enable arrangement of the connecting device 1 symmetrically between the structural side members 2a, 2b.

A second preferred embodiment is disclosed in fig 2b, wherein one end portion 4 of the connecting device 1 is provided with a coupling device 3. The second end portion of the connecting device 1 is connected in a conventional manner to a second structural side member 2b. Preferably, the second end portion is connected first and the end portion comprising the adjustable coupling device 3 is affixed afterwards in order to enable lateral fixing of the structural side members 2a, 2b.

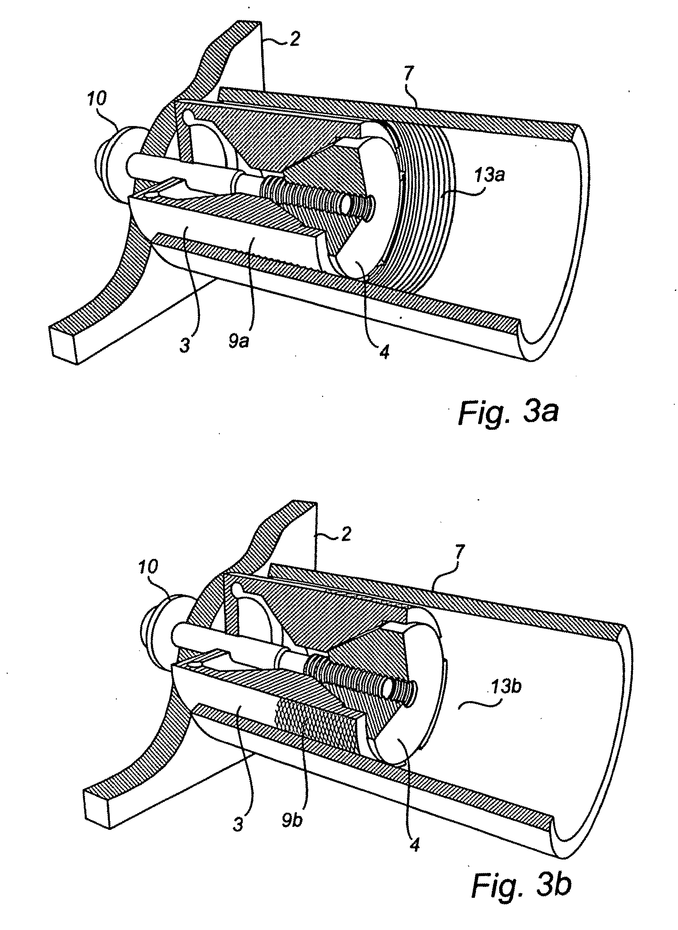

A third preferred embodiment is disclosed in fig 3a, wherein an inner surface portion 13a of said structural element 7 is provided with a rough surface portion 13a, for enabling mutual mechanical connection when said expandable coupling device 3 has been expanded. The rough surface portion, 13a is threaded for added mutual engagement after expansion.

It is realized that the coupling device 3 may be provided with a rough surface portion, although not shown here. The inner surface portion 13a of the structural element 7 is then not necessarily provided with a rough surface portion.

In fig 3b the rough surface portions 9b, 13b of the connecting device 1 according to a fourth preferred embodiment are substantially knurled. It is realized by a person skilled in the art that there exist other alternatives for combining alternative surfaces types, although not shown here, to create a reliable mechanical grip between the surface portions 9, 13 of the connecting device 1.

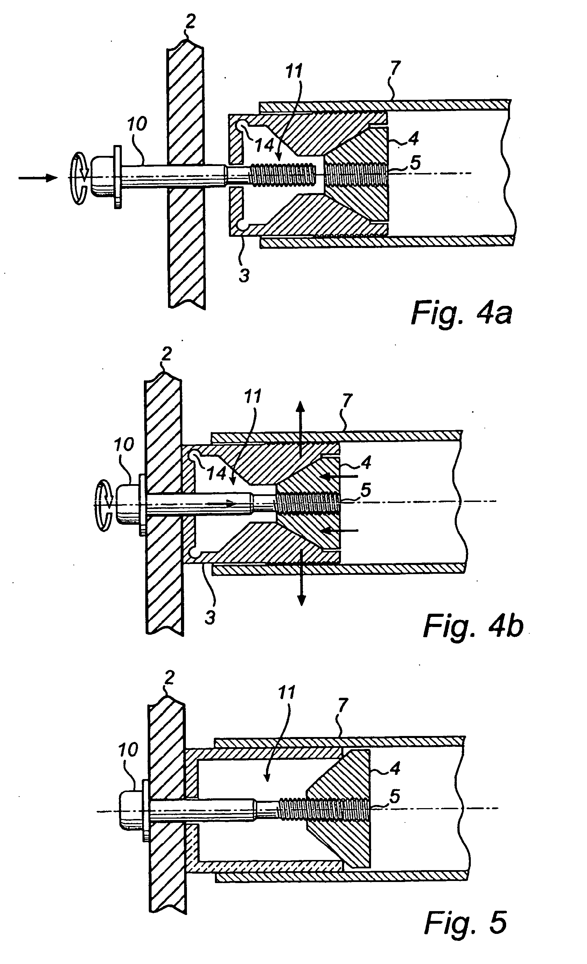

The function of the connecting device will be described in more detail with reference to fig 4a-4b. In fig 4a a connecting device is shown in a condition prior to being set in a fixed condition. A threaded bolt forming part of the screw joint is being introduced through a hole in a structural side member 2 and further through a passage 11 of the expandable coupling device 3. In the other end of the passage 11 a nut 4 is arranged. The nut 4 has a threaded hole 5 in its center adapted for receiving the bolt 10. In this condition the expandable coupling device 3 is slidably fitted in the end portion of the structural element 7. When screwing the bolt 10, the bolt engages with the nut 4 and the expandable coupling device 3 is pushed by the nut 4 towards the structural side member 2.

The screw joint also provides for expansion of said expandable coupling device 3 in a radial direction relative to the structural element 7 when said expandable coupling device 3 reaches a hard stop. This is further illustrated in fig 4b, in which figure the forces experienced by the connecting device 1 is indicated by arrows. The expansion of the expandable coupling device 3 provides for connection of an outer surface portion 9 of said expandable coupling device 3 to an inner surface portion 13 of said structural element 7.

It is realized from the above described that lateral fixing of two structural side members 2 by a connecting device 1 may be accomplished by using such a coupling in at least one of the end portions of the connecting structural element 7. The second end portion of said connecting device 1 may be fastened to a side member in any conventional manner as long as the first end portion is fastened using the connecting device 1. It is of course possible to provide each end portion of the structural element 7 with an expandable coupling device 3 in accordance with the invention. This is particularly suitable when the connecting device 1 is to be positioned symmetrically between the structural side members 2.

Furthermore, it is realized that the lateral fixing of said connecting device 1 is enabled by operation of one screw joint which is accessible from the outside of said structural member 2a, 2b relative to the connecting device 1.

Referring now to fig 5 wherein a fifth embodiment of the invention is disclosed. According to this fifth embodiment of the invention a more simple design of the expandable coupling device is preferably used. This design may be suitable, for example, where the loads to be transferred by the connecting device are not significantly great.

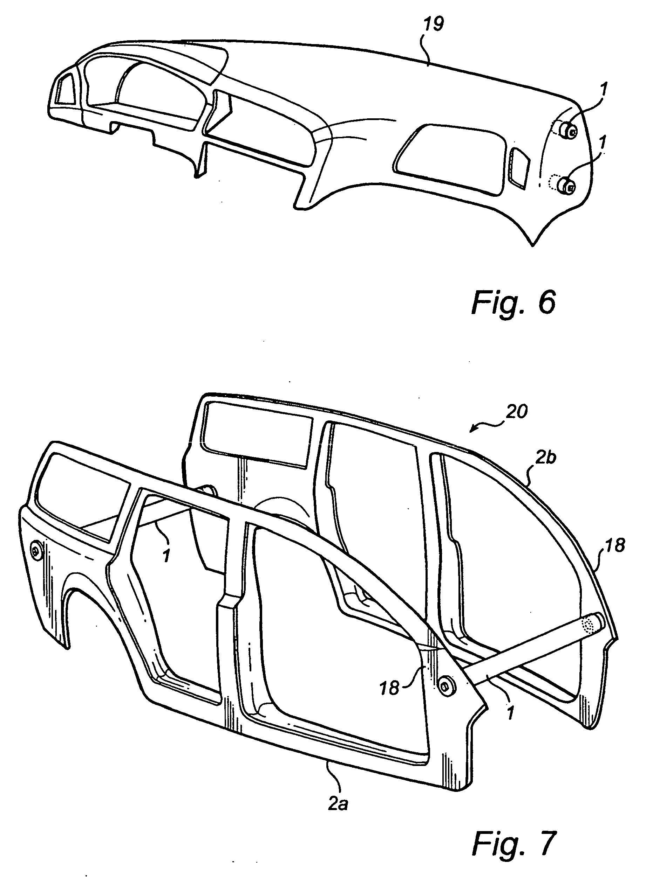

In fig 6 a connecting device 1 according to a second aspect of the invention is embedded in an IP-panel 19. This is to give an idea of the possibilities of a compact and integrated design that may be accomplished by the connecting device 1.

Fig 7 discloses a vehicle body structure provided with two laterally fixed structural members 2a, 2b according to a third aspect of the invention. One of said connecting devices 1 is provided for lateral fixing of a set of A-pillars 18.

Although the present invention has been described in connection with particular embodiments thereof, it is to be understood that various modifications, alterations and adaptations may be made by those skilled in the art without departing from the spirit and scope of the invention.

Hence it is realized that the connecting device 1 can be used together with structural side members 2 that are designed in various ways without departing from the scope of the invention. The connecting device 1 according to the invention is not limited to use of specific material. The conical angle of the nut 4 and/or the passage 11 of the expandable coupling device 3 can be altered in order to secure optimum load transformation and performance of the connecting device 1.

## Claims

1. A vehicle body (20) provided with a connecting device (1), for providing lateral connection of two structural members (2a, 2b) of a vehicle body in an adaptable manner, said connecting device (1) comprising a structural element (7) provided with at least one receiving opening, in which a coupling device (3) is movably fitted, said coupling device (3) having a passage (11) and being connectable to a screw joint comprising a nut (4) and a threaded bolt (10) extending into said passage (11) and further for engagement with said nut (4), wherein said coupling device (3) is expandable and said nut (4) is designed for causing radial expansion of said coupling device (3) by operation of said threaded bolt (10) when said coupling device (3) has reached a hard stop, preferably a structural member (2), said expansion providing a mechanical connection between an inner sidewall portion (13) of said structural element (7) and an outer sidewall portion (9) of said coupling device (3), **characterized in that** at least one of said sidewall portions (9, 13) is provided with a rough surface for accomplishing a firm mechanical connection, when said coupling device (3) has reached a hard stop and said coupling device (3) has been expanded.

2. The vehicle body (20) provided with the connecting device (1) according to claim 1, wherein the sidewall portion of the structural element (7) is harder than the coupling device (3).

3. The vehicle body (20) provided with the connecting device (1) according to any one of claims 1-2, wherein at least one of said rough sidewall portions (9, 13) is knurled.

4. The vehicle body (20) provided with the connecting device (1) according to any one of claims 1-3, wherein at least one of said rough sidewall portions (9, 13) is threaded.

5. The vehicle body (20) provided with the connecting device (1) according to any one of claims 1-4, wherein said nut (4) has a wider cross section at the end portion to be arranged away from the closest structural member (2a, 2b) than the end portion of said nut (4) to be arranged closer to the closest structural member (2a, 2b).

6. The vehicle body (20) provided with the connecting device (1) according to any one of claims 1-5, wherein at least a portion of said nut (4) has a conical shape.

7. The vehicle body (20) provided with the connecting device (1) according to any one of claims 1-6, wherein said coupling device (3) is substantially cup shaped.

8. The vehicle body (20) provided with the connecting device (1) according to any one of claims 1-7, wherein a sidewall of said coupling device (3) is provided with at least one slit (8).

9. The vehicle body (20) provided with the connecting device (1) according to any one of claims 1-8, wherein positioning and fixing of said coupling device (1) is enabled by operation of one screw joint.

10. The vehicle body (20) provided with the connecting device (1) according to any one of claims 1-9, wherein said structural element (7) is connected with one end to a structural member (2b) and provided with one coupling device (3) in another end portion for enabling lateral fixing in an adaptable manner of two structural members (2a, 2b) in order to compensate for lateral distance tolerance deviations between said structural members (2a, 2b) .

11. The vehicle body (20) provided with the connecting device (1) according to any one of claims 1-9, wherein said structural element (7) is provided with two coupling devices (3) for enabling lateral fixing in an adaptable manner of two structural members (2a, 2b) .

12. The vehicle body (20) provided with the connecting device (1) according to any one of claims 1-11, wherein the lateral fixing of said connecting device (1) is enabled by operation of one screw joint which is accessible from the outside of said structural member (2a, 2b) relative to the coupling device (1).

13. The vehicle body (20) according to claim 1, wherein said connecting device (1) is provided for lateral fixing of a set of A-pillars (18).

14. The vehicle body (20) according to claim 13, wherein said connecting device (1) is provided within an IP-panel (19).

## Patentansprüche

1. Fahrzeugkarosserie (20), die mit einer Verbindungsvorrichtung (1) ausgestattet ist, um eine seitliche Verbindung von zwei Strukturbauteilen (2a, 2b) einer Fahrzeugkarosserie in einer anpassbaren Weise bereitzustellen, wobei die Verbindungsvorrichtung (1) ein Strukturelement (7) aufweist, das mit mindestens einer Aufnahmeöffnung versehen ist, in welche eine Kopplungsvorrichtung (3) beweglich eingepasst ist, wobei die Kopplungsvorrichtung (3) eine Durchführung (11) aufweist und an eine Schraubverbindung anschließbar ist, die eine Gegenmutter (4) und einen Gewindebolzen (10) umfasst, der sich in die Durchführung (11) und weiter für den Eingriff in die Gegenmutter (4) erstreckt, wobei die Kopplungsvorrichtung (3) aufweitungsfähig ist und die Gegenmutter (4) ausgelegt ist, ein radiales Aufweiten der Kopplungsvorrichtung (3) durch Betätigen des Gewindebolzens (10) zu bewirken, wenn die Kopplungsvorrichtung (3) einen Anschlag, vorzugsweise ein Strukturbauteil (2), erreicht hat, wobei das Aufweiten eine mechanische Verbindung zwischen einem inneren Seitenwandteilbereich (13) des Strukturelements (7) und einem äußeren Seitenwandteilbereich (9) der Kopplungsvorrichtung (3) herstellt, **dadurch gekennzeichnet, dass** mindestens einer der Seitenwandteilbereiche (9, 13) mit einer rauen Oberfläche versehen ist, um eine feste mechanische Verbindung zu erzielen, wenn die Kopplungsvorrichtung (3) einen Anschlag erreicht hat und die Kopplungsvorrichtung (3) aufgeweitet wurde.

2. Fahrzeugkarosserie (20) mit der Verbindungsvorrichtung (1) nach Anspruch 1, wobei der Seitenwandteilbereich des Strukturelements (7) härter als die Kopplungsvorrichtung (3) ist.

3. Fahrzeugkarosserie (20) mit der Verbindungsvorrichtung (1) nach einem der Ansprüche 1 - 2, wobei mindestens einer der rauen Seitenwandteilbereiche (9, 13) gerändelt ist.

4. Fahrzeugkarosserie (20) mit der Verbindungsvorrichtung (1) nach einem der Ansprüche 1 - 3, wobei mindestens einer der rauen Seitenwandteilbereiche (9, 13) mit einem Gewinde versehen ist.

5. Fahrzeugkarosserie (20) mit der Verbindungsvorrichtung (1) nach einem der Ansprüche 1 - 4, wobei die Gegenmutter (4) an dem Endabschnitt, der abgewandt von dem nächsten Strukturbauteil (2a, 2b) anzuordnen ist, einen größeren Querschnitt aufweist als der Endabschnitt der Gegenmutter (4), der näher an dem nächsten Strukturbauteil (2a, 2b) anzuordnen ist.

6. Fahrzeugkarosserie (20) mit der Verbindungsvorrichtung (1) nach einem der Ansprüche 1 - 5, wobei mindestens ein Teilbereich der Gegenmutter (4) eine konische Gestalt aufweist.

7. Fahrzeugkarosserie (20) mit der Verbindungsvorrichtung (1) nach einem der Ansprüche 1 - 6, wobei die Kupplungsvorrichtung (3) weitgehend kelchförmig ist.

8. Fahrzeugkarosserie (20) mit der Verbindungsvorrichtung (1) nach einem der Ansprüche 1 - 7, wobei eine Seitenwand der Kopplungsvorrichtung (3) mit mindestens einem Schlitz (8) versehen ist.

9. Fahrzeugkarosserie (20) mit der Verbindungsvorrichtung (1) nach einem der Ansprüche 1 - 8, wobei das Positionieren und Fixieren der Kopplungsvorrichtung (1) durch Betätigen einer Schraubverbindung erreicht wird.

10. Fahrzeugkarosserie (20) mit der Verbindungsvorrichtung (1) nach einem der Ansprüche 1 - 9, wobei das Strukturelement (7) mit einem Ende an einem Strukturbauteil (2b) angeschlossen und an einem anderen Endabschnitt mit einer Kopplungsvorrichtung (3) versehen ist, um ein seitliches Fixieren der beiden Strukturbauteile (2a, 2b) in einer flexiblen Weise zu ermöglichen, um seitliche Abstandstoleranzabweichungen zwischen den Strukturbauteilen (2a, 2b) zu kompensieren.

11. Fahrzeugkarosserie (20) mit der Verbindungsvorrichtung (1) nach einem der Ansprüche 1 - 9, wobei das Strukturelement (7) mit zwei Kopplungsvorrichtungen (3) versehen ist, um ein seitliches Fixieren der beiden Strukturbauteile (2a, 2b) in einer flexiblen Weise zu ermöglichen.

12. Fahrzeugkarosserie (20) mit der Verbindungsvorrichtung (1) nach einem der Ansprüche 1-11, wobei das seitliche Fixieren der Verbindungsvorrichtung (1) bezüglich der Kopplungsvorrichtung (1) durch Betätigen einer Schraubverbindung ermöglicht wird, die von der Außenseite her zugänglich ist.

13. Fahrzeugkarosserie (20) nach Anspruch 1, wobei die Verbindungsvorrichtung (1) für das seitliche Fixieren eines Satzes von A-Säulen (18) vorgesehen ist.

14. Fahrzeugkarosserie (20) nach Anspruch 13, wobei die Verbindungsvorrichtung (1) in einem P-Paneel (19) vorgesehen ist.

## Revendications

1. Carrosserie de véhicule (20) pourvue d'un dispositif de raccordement (1), pour fournir un raccordement latéral de deux organes structurels (2a, 2b) d'une carrosserie de véhicule selon une manière adaptable, ledit dispositif de raccordement (1) comprenant un élément structurel (7) pourvu d'au moins une ouverture de réception, dans laquelle un dispositif de couplage (3) est, de manière mobile, fixé, ledit dispositif de couplage (3) ayant un passage (11) et étant raccordable à un raccord à vis comprenant un écrou (4) et un boulon fileté (10) s'étendant dans ledit passage (11) et, en outre, pour une mise en prise avec ledit écrou (4), dans laquelle ledit dispositif de couplage (3) est extensible et ledit écrou (4) est conçu pour provoquer une dilatation radiale dudit dispositif de couplage (3) par l'opération dudit boulon fileté (10) lorsque ledit dispositif de couplage (3) a atteint un arrêt dur, de préférence, un organe structurel (2), ladite dilatation fournissant un raccordement mécanique entre une partie de paroi latérale interne (13) dudit élément structurel (7) et une partie de paroi latérale externe (9) dudit dispositif de couplage (3), **caractérisée en ce qu'**au moins l'une desdites parties de paroi latérale (9, 13) est prévue avec une surface rugueuse pour réaliser un raccordement mécanique ferme lorsque ledit dispositif de couplage (3) a atteint un arrêt dur et lorsque ledit dispositif de couplage (3) a été dilaté.

2. Carrosserie de véhicule (20) pourvue du dispositif de raccordement (1) selon la revendication 1, dans laquelle la partie de paroi latérale de l'élément structurel (7) est plus dure que ledit dispositif de couplage (3).

3. Carrosserie de véhicule (20) pourvue du dispositif de raccordement (1) selon l'une quelconque des revendications 1 à 2, dans laquelle au moins l'une desdites parties de paroi latérale rugueuses (9, 13) est moletée.

4. Carrosserie de véhicule (20) pourvue du dispositif de raccordement (1) selon l'une quelconque des revendications 1 à 3, dans laquelle au moins l'une desdites parties de paroi latérale rugueuses (9, 13) est filetée.

5. Carrosserie de véhicule (20) pourvue du dispositif de raccordement (1) selon l'une quelconque des revendications 1 à 4, dans laquelle ledit écrou (4) a une coupe transversale plus large à la partie d'extrémité qui doit être disposée loin de l'organe structurel le plus proche (2a, 2b) que la partie d'extrémité dudit écrou (4) qui doit être disposée plus près de l'organe structurel le plus proche (2a, 2b).

6. Carrosserie de véhicule (20) pourvue du dispositif de raccordement (1) selon l'une quelconque des revendications 1 à 5, dans laquelle au moins une partie dudit écrou (4) a une forme conique.

7. Carrosserie de véhicule (20) pourvue du dispositif de raccordement (1) selon l'une quelconque des revendications 1 à 6, dans laquelle ledit dispositif de couplage (3) est sensiblement en forme de tasse.

8. Carrosserie de véhicule (20) pourvue du dispositif de raccordement (1) selon l'une quelconque des revendications 1 à 7, dans laquelle une paroi latérale dudit dispositif de couplage (3) est pourvue d'au moins une fente (8).

9. Carrosserie de véhicule (20) pourvue du dispositif de raccordement (1) selon l'une quelconque des revendications 1 à 8, dans laquelle le positionnement et la fixation dudit dispositif de couplage (1) est permise par le fonctionnement d'un raccord à vis.

10. Carrosserie de véhicule (20) pourvue du dispositif de raccordement (1) selon l'une quelconque des revendications 1 à 9, dans laquelle ledit élément structurel (7) est raccordé avec une extrémité à un organe structurel (2b) et est prévu avec un dispositif de couplage (3) à une autre partie d'extrémité pour permettre une fixation latérale selon une manière adaptable de deux organes structurels (2a, 2b) afin de compenser les écarts de tolérance de distance latérale entre lesdits organes structurels (2a, 2b).

11. Carrosserie de véhicule (20) pourvue du dispositif de raccordement (1) selon l'une quelconque des revendications 1 à 9, dans laquelle ledit élément structurel (7) est prévu avec deux dispositifs de couplage (3) pour permettre une fixation latérale selon une manière adaptable de deux organes structurels (2a, 2b).

12. Carrosserie de véhicule (20) pourvue du dispositif de raccordement (1) selon l'une quelconque des revendications 1 à 11, dans laquelle la fixation latérale dudit dispositif de raccordement (1) est permise par le fonctionnement d'un raccord à vis qui est accessible depuis l'extérieur dudit organe structurel (2a, 2b) par rapport au dispositif de couplage (1).

13. Carrosserie de véhicule (20) selon la revendication 1, dans laquelle ledit dispositif de raccordement (1) est prévu pour une fixation latérale d'une série de piliers en forme de A (18).

14. Carrosserie de véhicule (20) selon la revendication 13, dans laquelle ledit dispositif de raccordement (1) est prévu à l'intérieur d'un tableau de bord (19).
